# NEW EUROPEAN PATENT SPECIFICATION

(11) **EP 1 340 656 B2**
(45) Date of publication and mention of the opposition decision: **11.07.2012**
(45) Mention of the grant of the patent: 08.07.2009
(21) Application number: 03001367.6
(22) Date of filing: 24.01.2003
(51) Int. Cl.: B60R 21/16, B60R 21/26

(54) **Airbag apparatus**
Airbagvorrichtung
Dispositif d'airbag

(30) Priority: 25.02.2002 JP 2002048175
(43) Date of publication of application: 03.09.2003
(73) Proprietor: TAKATA CORPORATION, Minato-ku, Tokyo 106-8510 (JP)
(72) Inventor: Kumagai, Masayoshi, Minato-ku, Tokyo 106-8510 (JP); Takedomi, Akifumi, Minato-ku, Tokyo 106-8510 (JP); Tanaka, Tadashi, Minato-ku, Tokyo 106-8510 (JP); Kurimoto, Takeshi, Minato-ku, Tokyo 106-8510 (JP)
(74) Representative: Banzer, Hans-Jörg

(56) References cited:
- EP-A- 0 999 101
- DE-A1- 19 850 448
- DE-U- 20 016 717
- DE-U- 29 905 770
- US-A- 5 556 128
- US-A- 6 062 143

## Description

### [Technical Field of the Invention]

The present invention relates to a side airbag apparatus for protecting an occupant in a motor vehicle or the like, and more specifically, it relates to an airbag apparatus having an airbag the interior of which is divided into a plurality of chambers.

### [Description of the Related Art]

As well known, airbag apparatus inflate an airbag with a gas generator and receive an occupant's body with this inflated airbag.

Known airbags have an arrangement in which, for early inflation of a portion of the airbag, to which an occupant abuts early, prior to the other portions, the interior of the airbag is divided into a plurality of chambers, gas is supplied from a gas generator to part of the chambers to inflate it early, and then the gas that has passed through the chamber is made to flow in the other chambers to inflate them.

From EP 0 999 101 an airbag apparatus according to the preamble of claim 1 is known wherein an inflator having a gas outlet at a lower end is accommodated in a housing. The housing has a first opening extending along a lateral side of the inflator and a second opening located near a top portion of the inflator. The first hole is connected with a first airbag, whereas the second hole is connected with a second airbag. The airbag apparatus of EP 0 999 101 A1 may in particular be used as a side airbag.

### [Problems to be Solved by the Invention]

Accordingly, the object of the present invention is to provide a side airbag apparatus in which gas from a gas generator is directly supplied to each chamber of an airbag.

### [Means for Solving the Problems]

According to the present invention, this object is achieved by a side airbag apparatus as defined in claim 1. The dependent claims define advantageous and preferred embodiments of the present invention.

In the side airbag apparatus according to the present invention, the side airbag apparatus comprises: an airbag the interior of which is divided into a plurality of chambers; and a gas generator for inflating the airbag and is characterized in that gas is guided directly to each chamber from a common gas generator.

In such an airbag apparatus, gas from the gas generator is directly supplied to each chamber without passing through the other chambers. Therefore, the amount and the pressure of gas to be guided to each chamber can individually be set so that the gas pressure of each chamber becomes target gas pressure by making each chamber into a discommunicating state and setting the size of the gas inlet of each chamber depending on the target gas pressure thereof.

In the present invention, a gas distributor having a plurality of gas outlets is mounted to gas jets of the gas generator; and gas is supplied to each chamber through the gas outlets of the gas distributor. Using the gas distributor as described above facilitates the setting of target values of the distribution amount and supply pressure of gas to each chamber. Also, using a popular gas generator such as a commercially available product and separately designing only a gas distributor to be mounted thereto can reduce cost. The gas jets and the gas distributor are provided at only one end of the gas generator.

In this case, setting the bores of the gas outlets of the gas distributor depending on the inflation characteristics of each chamber facilitates obtaining a target value of the amount and the pressure of gas to be supplied to each chamber.

### [Brief Description of the Drawings]

Fig. 1 is a perspective view of a vehicle sheet having a side airbag apparatus serving as an airbag according to an embodiment.
Fig. 2(a) is a sectional view taken along line II-II of Fig. 1; and Fig. 2(b) is a sectional view taken along line B-B of Fig. 2(a).
Fig. 3 is a perspective view of a gas generator and a gas distributor.
Fig. 4 is a sectional perspective view of the gas generator and the gas distributor.

### [Description of the Embodiments]

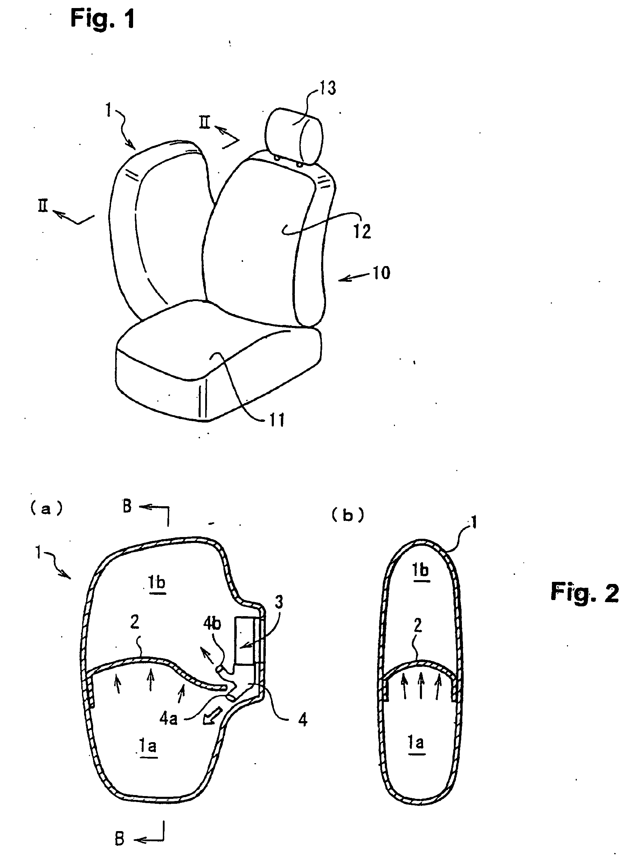

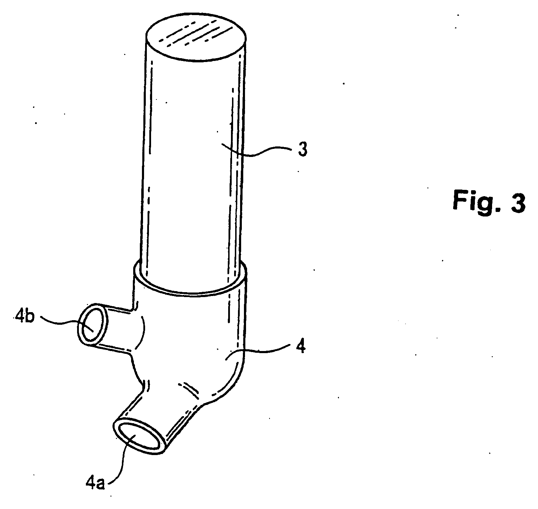

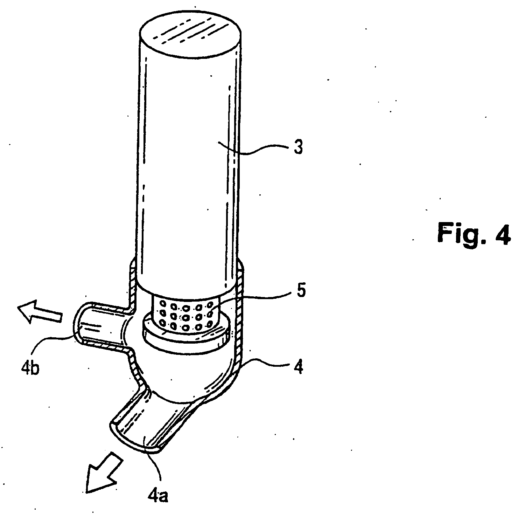

The present invention will be described with reference to the drawings below. Fig. 1 is a perspective view of a vehicle sheet having a side airbag apparatus serving as an airbag apparatus according to the embodiment; Fig. 2(a) is a sectional view taken along line II-II of Fig. 1; Fig. 2(b) is a sectional view taken along line B-B of Fig. 2(a); Fig. 3 is a perspective view of a gas generator and a gas distributor; and Fig. 4 is a sectional perspective view of the gas generator and the gas distributor.

As shown in Fig. 1, a side airbag 1 is constructed so as to inflate along a window side portion of a seet 10. The seet 10 includes a seet cushion 11, a seet back 12, and a headrest 13.

The seet back 12 has a casing (not shown) of the side airbag apparatus mounted on the side thereof, in which the side airbag 1 is folded to be housed in the casing and is covered with a module cover (not shown).

This side airbag 1 is formed of a sheet-like material such as cloth and a resin sheet in bag shape, wherein the interior is divided into a lower first chamber 1a and an upper second chamber 1b with a partition panel 2 of which the interior is almost horizontal. The first chamber 1a and the second chamber 1b are not substantially communicated with each other.

In this embodiment, the side airbag 1 includes a gas generator 3 therein. The gas generator 3 is retained by a holder (not shown), wherein the holder is fixed to the aforesaid casing together with the side airbag 1. In other words, the back face of the side airbag 1 is interposed between the holder and the casing, and the back face of the side airbag 1 is fastened to the casing with bolts or rivets, so that the back face of the side airbag 1 is fixed to the casing together.

The gas generator 3 mounts a gas distributor 4. In this embodiment, as shown in Figs. 3 and 4, the gas generator 3 has a substantially cylindrical shape, one end of which is provided with gas jets 5. The gas distributor 4 shaped like a substantially hemispherical shell is fastened to the gas generator 3 so as to surround the gas jets 5. The gas distributor 4 is firmly fastened to the gas generator 3 by caulking or welding.

The gas distributor 4 includes two gas outlets 4a and 4b. The first gas outlet 4a is oriented in substantially the same direction as the direction that the shaft center of the cylindrical gas generator 3 extends toward the one end. The second gas outlet 4b is oriented in the direction substantially perpendicularly crossing and lateral to the shaft center.

The first gas outlet 4a is larger in diameter than the second gas outlet 4b.

The first gas outlet 4a is inserted in the first chamber 1a and the second gas outlet 4b is inserted in the second chamber 1b, as shown in Fig. 2.

In the side airbag apparatus with such an arrangement, in the event of a side collision or an overturning of a vehicle, the gas generator 3 emits gas. The gas is emitted from the gas jets 5 and flows into the first chamber 1a and the second chamber 1b through the gas outlets 4a and 4b of the gas distributor 4, respectively, and inflates the chambers 1a and 1b. Thus, the airbag 1 is deployed along the window side of the seat 10, as shown in Fig. 1. In this case, the first gas outlet 4a is larger in diameter than the second gas outlet 4b; therefore, gas is supplied to the first chamber 1a in larger quantities and at higher pressure than to the second chamber 1b. Consequently, the first chamber 1a is inflated at high internal pressure and receives lateral movement of the waist of an occupant. The second chamber 1b is inflated at lower internal pressure than that of the first chamber 1a, which is preferable for receiving the right upper half of the occupant's body softly.

In this embodiment, the gas generator 3 is popular, to which the gas distributor 4 is retrofitted; thus, the cost is low. Also, the bores of the gas outlets 4a and 4b of the gas distributor 4 can be designed depending on the target internal pressure of the chambers 1a and 1b.

In the aforesaid embodiment, since the first chamber 1a is under high pressure, the sheet-like material for surrounding the first chamber 1a may be of high airtightness. Also, the joining section (for example, the seam) of the sheet-like materials for forming the first chamber 1a may be of high airtightness.

In the aforesaid embodiment, the side airbag 1 is divided into two chambers; however, it may be divided into three or more chambers and the gas distributor 4 may include three or more gas outlets.

The gas distributor 4 can be formed of metal, synthetic resin, or ceramic. However, the gas distributor may be made of cloth in this invention.

In the aforesaid embodiment, the gas generator is shaped like a cylinder; however, gas generators of various shapes, such as a disc, may be used. The present invention can be applied to various types of airbag apparatus other than the side airbag apparatus.

### [Advantages]

As described above, according to the present invention, the pressure when the chambers divided in the airbag are inflated can individually be set.

## Claims

1. A side airbag apparatus for a window side portion of a seat of a vehicle, comprising:
an airbag (1) which is constructed to inflate along the window side portion of the seat and is divided into a lower first chamber (1a) for receiving a waist of an occupant of the vehicle and an upper second chamber (1b) for receiving an upper half of a body of the occupant;
a common gas generator (3) for inflating the airbag (1), said gas generator (3) having gas jets (5) at only one end thereof; and
a gas distributor (4) having a first gas outlet (4a) and a second gas outlet (4b) and being mounted to said gas jets (5) of the gas generator (3);
wherein gas is guided directly from said common gas generator (3) through the first gas outlet (4a) to the lower first chamber (1a) and through the second gas outlet (4b) to the upper second chamber (1b),
**characterized in that**
said gas distributor (4) is provided only at said one end of said common gas generator (3); and
the first gas outlet (4a) of said gas distributor (4) has a larger diameter than the second gas outlet (4b).

2. The side airbag apparatus according to claim 1,
**characterized in that**
the gas distributor (4) has a substantially hemispherical shape.

3. The side airbag apparatus according to claim 1,
**characterized in that**
the gas generator (3) has a cylindrical shape; and
the first gas outlet (4a) of said gas distributor (4) is oriented in substantially the same direction as the direction of the shaft center of the gas generator (3).

## Patentansprüche

1. Seitenairbag-Vorrichtung für einen fensterseitigen Abschnitt eines Sitzes eines Fahrzeugs, umfassend:
einen Airbag (1), welcher ausgestaltet ist, um entlang des fensterseitigen Abschnitts des Sitzes aufgeblasen zu werden, und welcher in eine untere erste Kammer (1a) zum Aufnehmen einer Taille eines Insassen des Fahrzeugs und eine obere zweite Kammer (1 b) zum Aufnehmen einer oberen Hälfte eines Körpers des Insassen unterteilt ist;
einen gemeinsamen Gasgenerator (3), um den Airbag (1) aufzublasen, wobei der Gasgenerator (3) nur an einem Ende Gasdüsen (5) aufweist; und
einen Gasverteiler (4), welcher einen ersten Gasausgang (4a) und einen zweiten Gasausgang (4b) aufweist und an den Gasdüsen (5) des Gasgenerators (3) angebracht ist;
wobei Gas von dem gemeinsamen Gasgenerator (3) durch den ersten Gasausgang (4a) zu der unteren ersten Kammer (1a) und durch den zweiten Gasausgang (4b) zu der oberen zweiten Kammer (1 b) direkt geführt wird,
**dadurch gekennzeichnet,**
**dass** der Gasverteiler (4) nur an dem einen Ende des gemeinsamen Gasgenerators (3) vorhanden ist; und
**dass** der erste Gasausgang (4a) des Gasverteilers (4) einen größeren Durchmesser als der zweite Gasausgang (4b) aufweist.

2. Airbag-Vorrichtung nach Anspruch 1,
**dadurch gekennzeichnet,**
**dass** der Gasverteiler (4) eine im Wesentlichen halbkugelförmige Form aufweist.

3. Airbag-Vorrichtung nach Anspruch 1,
**dadurch gekennzeichnet,**
**dass** der Gasgenerator (3) eine zylindrische Form aufweist; und
**dass** der erste Gasausgang (4a) des Gasverteilers (4) im Wesentlichen in derselben Richtung ausgerichtet ist wie die Richtung der Mittelachse des Gasgenerators (3).

## Revendications

1. Un dispositif de coussin de sécurité gonflable latéral pour une partie latérale de fenêtre d'un siège d'un véhicule, comprenant :
un coussin de sécurité gonflable (1) qui est construit afin de se gonfler le long de la partie latérale de fenêtre du siège et qui est divisé en une première chambre inférieure (1a) pour recevoir la taille d'un occupant du véhicule et une deuxième chambre supérieure (1b) pour recevoir une moitié supérieure du corps de l'occupant ;
un générateur de gaz commun (3), pour gonfler le coussin de sécurité gonflable (1), ledit générateur de gaz (3) comprenant des jets de gaz (5) uniquement à une extrémité de celui-ci, et
un distributeur de gaz (4), comprenant une première sortie de gaz (4a) et une deuxième sortie de gaz (4b) et étant monté sur lesdits jets de gaz (5) du générateur de gaz (3),
dans lequel du gaz est guidé directement à partir dudit générateur de gaz commun (3) à travers la première sortie de gaz (4a) à la première chambre inférieure (1a) et à travers la deuxième sortie de gaz (4b) à la deuxième chambre supérieure (1b),
**caractérisé en ce que**
ledit distributeur de gaz (4) est prévu uniquement à ladite extrémité dudit générateur de gaz commun (3) ; et
la première sortie de gaz (4a) dudit distributeur de gaz (4) présente un diamètre supérieur à celui de la deuxième sortie de gaz (4b).

2. Le dispositif de coussin de sécurité gonflable latéral selon la revendication 1, **caractérisé en ce que**
le distributeur de gaz (4) présente une forme sensiblement hémisphérique.

3. Le dispositif de coussin de sécurité gonflable latérale selon la revendication 1, **caractérisé en ce que**
le générateur de gaz (3) présente une forme cylindrique ; et
la première sortie de gaz (4a) dudit distributeur de gaz (4) est orientée sensiblement selon la même direction que la direction de l'axe central du générateur de gaz (3).
